# EUROPÄISCHE PATENTSCHRIFT

(11) **EP 3 837 142 B1**
(45) Veröffentlichungstag und Bekanntmachung des Hinweises auf die Patenterteilung: **10.08.2022**
(21) Anmeldenummer: 19729523.1
(22) Anmeldetag: 06.06.2019
(51) Int. Cl.: B60S 1/48, B60S 1/52

(54) **WISCHVORRICHTUNG**
WIPER DEVICE
DISPOSITIF D'ESSUIE-GLACE

(30) Priorität: 15.08.2018 DE 102018213726
(43) Veröffentlichungstag der Anmeldung: 23.06.2021
(73) Patentinhaber: Robert Bosch GmbH, 70442 Stuttgart (DE)
(72) Erfinder: TERENTIC, Andrija, 11 000 Belgrade (RS); RAPP, Harald, 77815 Buehl (DE); KRUSE, Michael, 76547 Sinzheim (DE)
(86) Internationale Anmeldenummer: PCT/EP2019/064837
(87) Internationale Veröffentlichungsnummer: WO 2020/035190

(56) Entgegenhaltungen:
- EP-A1- 2 368 776
- DE-A1-102009 059 118
- DE-A1-102014 226 740
- FR-A1- 2 994 148
- FR-A1- 3 002 507
- US-A1- 2013 255 023

## Beschreibung

### Stand der Technik

Es ist bereits eine Wischvorrichtung mit einem Wischarm, der zumindest eine Fluidkanaleinheit führt, und einem Wischblatt, die dazu vorgesehen ist Wischflüssigkeit gezielt in Wischrichtung des Wischblattes abzugeben, vorgeschlagen worden. FR 3 002 507 A1 offenbart den Oberbegriff von Anspruch 1.

### Offenbarung der Erfindung

Die Erfindung geht aus von einer Wischvorrichtung mit einem Wischarm, der zumindest eine Fluidkanaleinheit führt, mit einem Wischblatt, und mit zumindest einem mit der zumindest einen Fluidkanaleinheit gekoppelte Fluidausgabeeinheit, die dazu vorgesehen ist Wischflüssigkeit abhängig von einer Wischrichtung des Wischblattes gezielt in zumindest zwei Richtungen abzugeben.

Erfindungsgemäß wird vorgeschlagen, dass die Wischvorrichtung zumindest eine mit der Fluidkanaleinheit gekoppelte mechanische Ventileinheit, die in der Umgebung der Verbindung zwischen Wischarm und Wischblatt angeordnet ist, und zumindest eine mit der Fluidkanaleinheit gekoppelte weitere Ventileinheit, die wesentlich von der zumindest einen mechanischen Ventileinheit beabstandet ist und strömungstechnisch vor der zumindest einen mechanischen Ventileinheit angeordnet ist, umfasst.

Die Wischvorrichtung ist vorzugsweise zu einem Einsatz an einem Fahrzeug, insbesondere einem Kraftfahrzeug, vorgesehen. Denkbar ist auch der Einsatz an einer Scheibenfront und/oder Spiegelfläche eines Gebäudes oder anderen statischen Objektes. Vorzugsweise sind/ist die mechanische Ventileinheit und/oder die weitere Ventileinheit strömungstechnisch in der Fluidkanaleinheit angeordnet. Bevorzugt sind/ist die mechanische Ventileinheit und/oder die weitere Ventileinheit zwischen zumindest zwei Teilbereichen der Fluidkanaleinheit zwischengeschaltet. Die Fluidkanaleinheit weist zumindest einen Fluidkanal auf. Vorzugsweise ist der Fluidkanal als Verbindung eines Fluidaufnahmebehälters des Fahrzeugs und der weiteren Ventileinheit vorgesehen. Außerdem umfasst die Fluidkanaleinheit zumindest einen Fluidteilkanal. Vorzugsweise ist der Fluidteilkanal zu einer Verbindung der weiteren Ventileinheit mit der Fluidausgabeeinheit vorgesehen, insbesondere zu einer Führung eines Fluids. Vorteilhaft umfasst die Fluidkanaleinheit zumindest zwei Fluidteilkanäle. Es ist jedoch auch denkbar, dass die Fluidkanaleinheit eine von zwei abweichende Anzahl an Fluidteilkanälen aufweist, wie beispielsweise drei Fluidteilkanäle, vier Fluidteilkanäle o. dgl. Die Fluidkanaleinheit ist insbesondere an der Verbindungseinheit angeordnet. Bevorzugt erstreckt sich die Fluidkanaleinheit bis zu der Verbindungseinheit. Vorzugsweise ist die Fluidkanaleinheit dazu vorgesehen, der Fluidausgabeeinheit ein auszugebendes Fluid zuzuleiten, insbesondere aus einem Fluidreservoir eines Fahrzeugs, an dem die Wischervorrichtung eingesetzt wird. Vorzugsweise erstreckt sich die Fluidkanaleinheit in einem an dem Wischarm angeordneten Zustand des Wischblatts von dem Wischarm bis zu dem Wischblatt oder bis zu einem Adapter. Vorteilhaft kann zumindest eine Ventileinheit den Fluidfluss durch die Fluidkanaleinheit regulieren.

Unter einer "Wischvorrichtung" soll insbesondere eine Vorrichtung verstanden werden, die zumindest ein Wischblatt und zumindest einen Wischarm umfasst. Unter einem "Wischblatt" soll insbesondere eine auswechselbare Vorrichtung der Wischvorrichtung verstanden werden, welche einen Kontaktbereich zu einer Scheibe, insbesondere Fahrzeugscheibe ausbildet und dazu vorgesehen ist mit dem Wischarm unverlierbar verbunden zu werden. Eine Verbindung zwischen dem zumindest einem Wischarm und dem zumindest einem Wischblatt kann durch eine Verbindungseinheit, welche insbesondere zumindest einen Adapter, besonders bevorzugt zumindest zwei Adapter, und zwar insbesondere einen Wischarmadapter und einen Wischblattadapter, unterstützt sein. Vorteilhaft kann eine Verbindungseinheit vom Wischarm zum Wischblatt bereitgestellt werden, die gleichzeitig eine Befestigungsfunktion und eine Fluidleitungsfunktion erfüllt. Unter einem "Wischarm" soll insbesondere eine Vorrichtung verstanden werden, welche dazu vorgesehen ist, eine Verbindung von einem Objekt, insbesondere Fahrzeug, zu einem Wischblatt zur Führung des Wischblattes auf der Scheibe bereitzustellen und an dem Objekt, insbesondere Fahrzeug, unverlierbar gelagert zu sein.

Bevorzugt soll unter einem "Fluidkanal" eine kanalartige Ausnehmung in zumindest einem Element der Wischvorrichtung, vorgesehen zur Führung eines Fluides, verstanden werden. Vorzugsweise weist der Fluidkanal einen zumindest im Wesentlichen kreisförmigen Querschnitt auf. Alternativ ist denkbar, dass der Fluidkanal einen polygonalen, insbesondere zumindest im Wesentlichen quadratischen, Querschnitt, einen elliptischen Querschnitt oder einen anderen, einem Fachmann als sinnvoll erscheinenden Querschnitt aufweist. Bevorzugt wird der Fluidkanal von einem Fluidleitungselement, wie beispielsweise einem Rohr und/oder insbesondere einem Schlauch, besonders bevorzugt von einem elastischen Schlauch, begrenzt. Es ist vorstellbar, dass das Fluidleitungselement innerhalb einer kanalartigen Ausnehmung in dem Wischarm angeordnet ist und/oder von Halterungen an dem Wischarm gehalten ist. Vorzugsweise verläuft eine Haupterstreckungsrichtung des Fluidkanals zumindest im Wesentlichen parallel, zu der Haupterstreckungsrichtung des Wischarmes. Unter einer "Haupterstreckungsrichtung" eines Objekts soll insbesondere eine Richtung verstanden werden, welche parallel zu einer längsten Kante eines kleinsten geometrischen Quaders verläuft, welcher das Objekt gerade noch vollständig umschließt. Unter "im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Es soll unter einem "Fluidteilkanal" eine kanalartige Ausnehmung in zumindest einem Element der Wischvorrichtung, vorgesehen zur Führung eines Fluides, analog zur Definition des Fluidkanals verstanden werden, die einen maximal gleichgroßen Querschnitt im Vergleich zum Fluidkanal aufweist. Vorzugsweise geht der Fluidkanal in die Fluidteilkanäle über, insbesondere mittels der weiteren Ventileinheit. Insbesondere weist der Fluidteilkanal, insbesondere die Fluidteilkanäle eine zumindest im Wesentlichen analoge Ausgestaltung zum Fluidkanal auf, insbesondere in Bezug auf die geometrische Ausgestaltung eines Querschnitts des Fluidkanals.

Insbesondere soll unter einer "Ventileinheit" eine Einheit verstanden werden, die zumindest ein Ventil und/oder zumindest ein Ventilbauteil umfasst. Vorzugsweise soll darunter eine Einheit verstanden werden, die zu einer Steuerung und/oder einer Regelung eines Durchflusses von Fluiden, insbesondere von Flüssigkeiten, besonders bevorzugt von Wischflüssigkeit, vorgesehen ist. Besonders bevorzugt soll darunter eine Einheit verstanden werden, die dazu vorgesehen ist, eine Durchflussmenge, eine Durchflussrichtung und/oder einen allgemeinen Durchfluss zu steuern und/oder zu regeln. Unter "vorgesehen" soll insbesondere speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Wischvorrichtung ist insbesondere zu einer Reinigung einer Scheibe, insbesondere einer Front- und/oder Heckscheibe, eines Fahrzeugs vorgesehen. Zu einer Reinigung der Scheibe soll ein Fluid auf die Scheibe ausgegeben werden, insbesondere soll das Fluid in Wischrichtung abgegeben werden. Vorzugsweise ist das Fluid als ein Wischwasser ausgebildet. Das Wischblatt, insbesondere eine Wischlippe des Wischblatts, ist vorzugsweise dazu vorgesehen, zu einer Reinigung der Scheibe über die Scheibe zu wischen. Insbesondere ist das Wischblatt dazu vorgesehen, auf der Scheibe befindlichen Schmutz, Flüssigkeit und/oder ein durch die Fluidausgabeeinheit auf die Scheibe ausgegebenes Fluid von der Scheibe wegzuwischen. Vorzugsweise ist der Wischarm dazu vorgesehen, das Wischblatt, welches insbesondere durch eine Verbindungseinheit an dem Wischarm befestigt ist, zu einer Reinigung der Scheibe über die Scheibe zu bewegen. Vorzugsweise ist der Wischarm an zumindest einer Antriebswelle eines Wischerantriebs eines Fahrzeugs angeordnet. Insbesondere wird der Wischarm von dem Wischerantrieb zu einer Bewegung relativ zu der Scheibe angetrieben. Vorzugsweise ist der Wischarm zumindest teilweise aus einem Metall ausgebildet. Alternativ oder zusätzlich ist vorstellbar, dass der Wischarm zumindest teilweise aus einem Kunststoff, aus einem Verbundwerkstoff oder aus einem anderen, einem Fachmann als sinnvoll erscheinenden Material ausgebildet ist.

Des Weiteren soll vorzugsweise darunter, dass "die zumindest eine Ventileinheit in einer Umgebung der Verbindung zwischen Wischarm und Wischblatt angeordnet ist" insbesondere verstanden werden, dass die Ventileinheit in einem Bereich angeordnet ist, der sich vorzugsweise blasenförmig um und über die Verbindungseinheit, insbesondere den Wischblattadapter und/oder den Wischarmadapter, erstreckt. Insbesondere soll darunter verstanden werden, dass die Ventileinheit in einem vorzugsweise kugelförmigen Bereich angeordnet ist, dessen Mittelpunkt in einem Schwerpunkt der Verbindungseinheit, insbesondere des Wischblattadapters und/oder des Wischarmadapters, liegt. Bevorzugt weist der vorzugsweise kugelförmige Bereich einen Durchmesser von maximal 40 cm, insbesondere von maximal 30 cm, vorzugsweise von maximal 20 cm und besonders bevorzugt von maximal 10 cm auf. Besonders bevorzugt umfasst der vorzugsweise kugelförmige Bereich mindestens den gesamten Wischblattadapter und/oder Wischarmadapter und insbesondere maximal das gesamte Wischblatt. Grundsätzlich ist auch denkbar, dass die Ventileinheit in einem tonnenförmigen Bereich angeordnet ist, dessen Mittelpunkt in einem Schwerpunkt der Verbindungseinheit, insbesondere des Wischblattadapters und/oder des Wischarmadapters, liegt.

Die Verbindungen zwischen Wischblatt und Wischarm sowie die Lagerung vom Wischarm, insbesondere an einem Fahrzeug, befinden sich vorzugsweise an den gegenüberliegenden Endbereichen des Wischarms. Die Ventileinheiten sind vorzugsweise in der Umgebung der Endbereiche des Wischarms angeordnet. Ein Endbereich des Wischarms ist insbesondere ein Bereich des Wischarms, an dem eine zumindest im Wesentlichen komplette maximale Erstreckung des Wischarms, insbesondere entlang einer Haupterstreckungsrichtung des Wischarms, endet. Vorzugsweise weist der Wischarm zumindest zwei, insbesondere voneinander abgewandte, Endbereiche auf.

Vorteilhaft kann eine Wischvorrichtung mit zumindest einer mechanischen Ventileinheit im wischblattnahen Endbereich des Wischarms bereitgestellt werden. Unter einer "mechanischen Ventileinheit" soll insbesondere eine Ventileinheit verstanden werden, die ohne eigene Energieversorgung den Fluidfluss kontrollieren kann. Insbesondere soll die mechanische Ventileinheit den Fluidfluss in eine Vorzugsrichtung erlauben und entgegen dieser Richtung sperren. Vorteilhaft ist die zumindest eine mechanische Ventileinheit als ein Rücklaufventil ausgebildet, die den Fluidfluss nur in eine Vorzugsrichtung ermöglicht. Vorteilhaft soll die zumindest eine mechanische Ventileinheit den Fluidfluss vom Wischarm zum Wischblatt erlauben und entgegen dieser Richtung sperren. Vorteilhaft kann die zumindest eine mechanische Ventileinheit damit einen Rücklauf von Wischflüssigkeit vom Wischblatt zum Wischarm verhindern.

Zudem kann vorteilhaft eine Wischvorrichtung bereitgestellt werden, wobei die zumindest eine weitere Ventileinheit zumindest teilweise in einer Umgebung einer Lagerung des Wischarms am Fahrzeug angeordnet ist. Vorteilhaft ist die weitere Ventileinheit als eine elektrische Ventileinheit ausgebildet. Unter einer "elektrischen Ventileinheit" soll insbesondere eine Ventileinheit verstanden werden, die mittels einer elektrischen Steuerung den Fluidfluss kontrollieren kann. Vorzugsweise umfasst die weitere Ventileinheit zumindest einen elektrisch ansteuerbaren Aktuator. Bevorzugt ist der Aktuator insbesondere zu einer Realisierung von zumindest zwei, insbesondere zumindest drei, Schaltstellungen vorgesehen. Insbesondere soll die weitere Ventileinheit den Fluidfluss in eine bestimmte Richtung erlauben und für andere Richtungen sperren oder den Fluidfluss in alle Richtungen sperren. Vorteilhaft soll die zumindest eine weitere Ventileinheit den Fluidfluss vom Fahrzeug zum Wischblatt regulieren. Bevorzugt ist die weitere Ventileinheit von einem Mehrwegeventil, insbesondere zumindest von einem Drei-Wege-Ventil gebildet. Vorzugsweise umfasst die weitere Ventileinheit zumindest drei Anschlüsse. Besonders bevorzugt umfasst die weitere Ventileinheit zudem zumindest zwei Schaltstellungen. Insbesondere ist die weitere Ventileinheit von einem 3/3 Wegeventil gebildet. Das 3/3 Wegeventil umfasst drei Anschlüsse. Das 3/3 Wegeventil umfasst außerdem drei Schaltstellungen. Eine Schaltstellung ist in diesem Fall für eine erste Fluidausgaberichtung vorgesehen. Eine zweite Schaltstellung ist in diesem Fall für eine zweite Fluidausgaberichtung vorgesehen. Eine dritte Schaltstellung ist die Sperrstellung ohne erlaubten Fluidfluss durch die weitere Ventileinheit. Grundsätzlich ist denkbar, dass die weitere Ventileinheit von einem 3/2 Wegeventil gebildet wird. Das 3/2 Wegeventil umfasst drei Anschlüsse. Das 3/2 Wegeventil umfasst außerdem zwei Schaltstellungen. Eine Schaltstellung ist in diesem Fall für eine erste Fluidausgaberichtung vorgesehen. Eine zweite Schaltstellung ist in diesem Fall für eine zweite Fluidausgaberichtung vorgesehen. In diesem Fall ist keine dritte Schaltstellung als Sperrstellung vorgesehen. Es sind verschiedene, einem Fachmann als sinnvoll erscheinende Ausgestaltungen der weiteren Ventileinheit denkbar, insbesondere kann die weitere Ventileinheit als ein Magnetventil mit einem Kolbenschieber ausgebildet sein. Vorteilhaft kann die zumindest eine weitere Ventileinheit dadurch die Ausgaberichtung von Wischflüssigkeit in Wischrichtung des Wischblattes steuern und anpassen. Durch die gesamte Sperrung des Fluidflusses wird zusätzlich vorteilhaft ein Rücklauf von Wischflüssigkeit vom Wischarm zum Fahrzeug verhindert.

Durch die erfindungsgemäße Ausgestaltung der Wischvorrichtung wird vorteilhaft eine kurze Reaktionszeit zwischen Betätigung des Wischens durch einen Benutzer bis zur ersten Fluidausgabe durch die Wischvorrichtung verkürzt. Vorteilhaft kann dadurch auch die Belastung durch auf den Wischarm wirkende Gewichtskräfte und/oder Trägheit vermindert bereitgestellt werden. Vorteilhaft kann ein besonders schmaler und/oder leichter Wischarm bereitgestellt werden. Vorteilhaft kann eine optisch ansprechende und aerodynamisch günstige Wischvorrichtung bereitgestellt werden. Vorteilhaft kann dadurch eine Energieersparnis erreicht werden.

Denkbar ist jedoch auch, dass die zumindest eine weitere Ventileinheit von einem mechanischen Wegeventil gebildet ist, das an die Bewegung der Lagerung des Wischarmes am Fahrzeug gekoppelt ist und somit die Fluidausgabe in Wischrichtung steuert. Vorteilhaft ist dabei, dass das mechanische Wegeventil ohne eigene Energieversorgung auskommt.

Vorteilhaft wird dadurch eine gewichtskraftmäßige und trägheitstechnische Entlastung des Wischarms erreicht, was ebenfalls vorteilhaft zu einer Energieersparnis führt, wobei die Bereitstellung von nur einem Anschluss der Fluidkanaleinheit an ein Wischflüssigkeitsreservoir für zumindest zwei Fluidausgaberichtungen gewährleistet bleibt.

Durch die erfindungsmäßige Ausgestaltung kann vorteilhaft eine Wischvorrichtung bereitgestellt werden, die den Fluidverlust im Wesentlichen vermeidet. Weiter wird vorteilhaft eine Reaktionszeit bereitgestellt die sicherheitsrelevante und auch komfortrelevante Vorzüge aufweist. Insbesondere kann durch die erfindungsmäßige Ausgestaltung der Wischvorrichtung vorteilhaft auf mehr als eine Pumpe zur Fluidförderung verzichtet werden.

Des Weiteren wird vorgeschlagen, dass die zumindest eine mechanische Ventileinheit zumindest teilweise in den Wischarm integriert ist. Insbesondere soll unter "zumindest teilweise in den Wischarm integriert" verstanden werden, dass die zumindest eine mechanische Ventileinheit teilweise innerhalb des kleinsten Quaders, der den Wischarm vollständig umfasst, enthalten ist. Dabei ist die mechanische Ventileinheit vorteilhaft zu mindestens 50 % in dem kleinsten Quader, der den Wischarm vollständig umfasst, enthalten. Besonders vorteilhaft ist die mechanische Ventileinheit zu mindestens 80 % in dem Quader, der den Wischarm vollständig umfasst enthalten. Ganz besonders vorteilhaft ist die mechanische Ventileinheit zu mindestens 95 % in dem kleinsten Quader, der den Wischarm vollständig umfasst, enthalten.

Des Weiteren wird vorgeschlagen, dass die zumindest eine weitere Ventileinheit zumindest teilweise in den Wischarm integriert ist. Vorzugsweise soll unter "zumindest teilweise in den Wischarm integriert" verstanden werden, dass die eine weitere Ventileinheit in einem kleinsten Quader, der den Wischarm gerade noch vollständig umfasst, zumindest teilweise enthalten ist. Dabei ist die weitere Ventileinheit vorteilhaft zu mindestens 50 % in dem Quader, der den Wischarm vollständig umfasst, enthalten. Besonders vorteilhaft ist die weitere Ventileinheit zu mindestens 80 % in dem kleinsten Quader enthalten. Ganz besonders vorteilhaft ist die weitere Ventileinheit zu 95 % in dem kleinsten Quader, der den Wischarm vollständig umfasst, enthalten. Denkbar ist auch, dass die weitere Ventileinheit zumindest teilweise in die Lagerung des Wischarmes am Objekt, insbesondere Fahrzeug, integriert ist. Insbesondere soll unter "zumindest teilweise in der Lagerung des Wischarms [...], integriert" verstanden werden, dass die eine weitere Ventileinheit in einem kleinsten Quader, der die Lagerung des Wischarms gerade noch vollständig umrandet, zumindest teilweise enthalten ist.

Überdies wird vorgeschlagen, dass die zumindest eine weitere Ventileinheit über eine Steuer- und/oder Regeleinheit ansteuerbar ist, die von der Bordsteuereinheit getrennt ausgebildet ist. Vorzugsweise ist die zumindest eine weitere Ventileinheit direkt mit der Steuer- und/oder Regeleinheit, wie insbesondere über eine Datenleitung, verbunden. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorteilhaft kann dadurch erreicht werden, dass die Wischvorrichtung verminderte Anfälligkeit gegen Störungen aufweist. Vorteilhaft kann eine defekte Wischvorrichtung nicht durch Begleiterscheinungen anderer fehlerhafter Bauteile in der Bordsteuereinheit entstehen. Insbesondere kann dadurch eine vorteilhaft sichere Wischvorrichtung bereitgestellt werden. Vorteilhaft kann die Wischvorrichtung kabelsparend angesteuert werden, wodurch insbesondere Gewichtsreduzierung sowie eine Platzbedarfsreduzierung erreicht werden kann. Es ist denkbar, dass die Steuer- und/oder Regeleinheit mobil bereitgestellt ist und/oder aus großer Entfernung die Steuerung übernimmt. Die Steuer- und/oder Regeleinheit kann insbesondere kabellos ausgebildet sein. Es ist dabei insbesondere auch denkbar, dass die Wischvorrichtung per Fernsteuerung und/oder Smartphone-App gesteuert ist. Alternativ ist denkbar, dass die weitere Ventileinheit von der Bordsteuereinheit gesteuert ist.

Ferner wird vorgeschlagen, dass die zumindest eine weitere Ventileinheit beheizbar ausgebildet ist. Insbesondere ist die weitere Ventileinheit durch ein Heizelement, insbesondere Heizdraht, beheizbar ausgebildet. Dadurch kann vorteilhaft ein Einfrieren der Ventileinheit verhindert werden. Vorteilhaft wird dadurch der sicherheitsrelevante Wischvorgang durch Kältewerte nicht eingeschränkt. Es ist denkbar, dass das Heizelement über elektrische Kabel und/oder kabellos, insbesondere induktiv, reguliert wird. Es ist auch denkbar, dass das Heizelement von einer Steuer- und/oder Regeleinheit reguliert, insbesondere auf einer Temperatur gehalten, wird. Dabei ist insbesondere denkbar, dass das Heizelement dazu vorgesehen ist, per Smartphoneapp gesteuert zu werden.

Außerdem wird vorgeschlagen, dass die weitere Ventileinheit zumindest zwei elektrische Anschlüsse besitzt. Dadurch kann vorteilhaft die Trennung von Aufheizung und Steuerung gewährleistet werden. Insbesondere weist die Ventileinheit zumindest einen Anschluss auf, welcher zum Heizen der Ventileinheit vorgesehen ist. Ferner weist die Ventileinheit zumindest einen Anschluss auf, welcher zum Steuern der Ventileinheit vorgesehen ist. Alternativ ist denkbar, dass die Ventileinheit einen, vorzugsweise einen einzigen, Anschluss aufweist, welcher insbesondere sowohl zum Steuern als auch zum Heizen der Ventileinheit vorgesehen ist.

Es wird vorgeschlagen, dass die zumindest eine mechanische Ventileinheit einzeln austauschbar ausgebildet ist. Vorteilhaft ist die mechanische Ventileinheit in zumindest einer Stellung des Wischarms von außen sichtbar ausgebildet. Dadurch kann eine mechanische Ventileinheit bereitgestellt werden, welche ohne vorherige Demontage ohne Montage sonstiger Bauteile der Wischvorrichtung ausgetauscht werden kann. Alternativ ist denkbar, dass die zumindest eine mechanische Ventileinheit nach Demontage der Wischvorrichtung vom Fahrzeug ausgetauscht werden kann.

Des Weiteren wird vorgeschlagen, dass die zumindest eine weitere Ventileinheit einzeln austauschbar ausgebildet ist. Vorteilhaft ist die weitere Ventileinheit in zumindest einer Stellung von außen sichtbar ausgebildet. Dadurch kann eine weitere Ventileinheit bereitgestellt werden, welche ohne vorherige Demontage oder Montage sonstiger Bauteile der Wischvorrichtung ausgetauscht werden kann. Vorteilhaft kann eine defekte Ventileinheit ohne Demontage der Wischvorrichtung ausgetauscht werden. Alternativ ist denkbar, dass die zumindest eine weitere Ventileinheit nach Demontage der Wischvorrichtung vom Fahrzeug ausgetauscht werden kann.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Wischvorrichtung, mit einem Wischblatt, mit einem Wischarm, mit zumindest einer mechanischen Ventileinheit und mit zumindest einer weiteren Ventileinheit in einer schematischen Schnittdarstellung in der Draufsicht und
- Fig. 2: die weitere Ventileinheit der erfindungsgemäßen Wischvorrichtung in einer Schnittdarstellung.

### Beschreibung des Ausführungsbeispiels

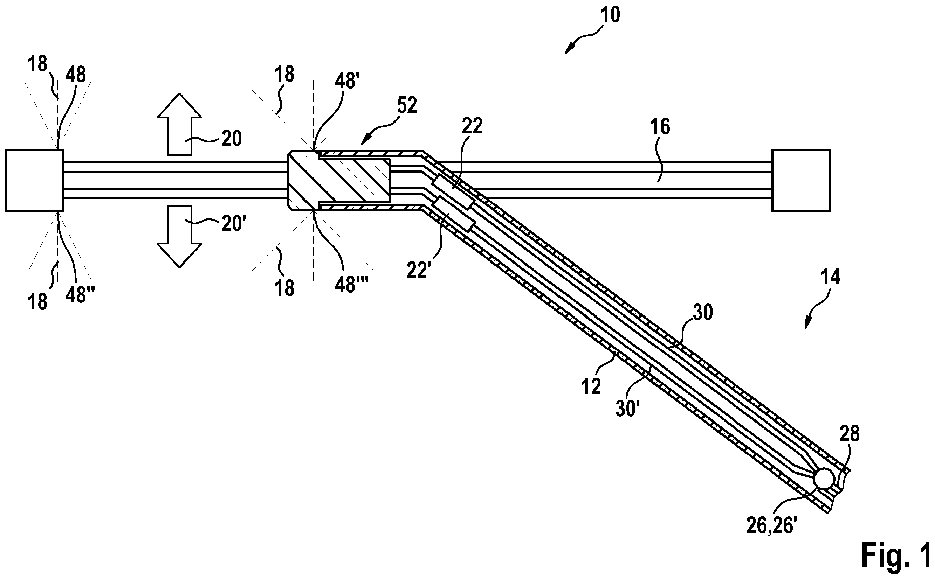

Figur 1 zeigt einen Querschnitt einer Wischvorrichtung 10. Die Wischvorrichtung 10 umfasst einen Wischarm 12 und ein Wischblatt 16. Das Wischblatt 16 ist zu einer Verbindung mit dem Wischarm 12 vorgesehen. Der Wischarm 12 und das Wischblatt 16 sind in Figur 1 verbunden dargestellt. Die Verbindung zwischen dem Wischarm 12 und dem Wischblatt 16 wird in einem ersten Endbereich des Wischarms 12 realisiert. Der Wischarm 12 weist einen Wischarmadapter auf und das Wischblatt 16 weist einen Wischblattadapter auf, über welche der Wischarm 12 und das Wischblatt 16 gekoppelt sind. Der Wischarm 12 ist an einem dem Wischblatt 16 abgewandten zweiten Endbereich an einem Fahrzeug (hier nicht näher dargestellt) angeordnet, insbesondere beweglich gelagert. Der Wischarm 12 kann über die Lagerung bewegt werden und führt dabei die Wischvorrichtung 10.

Ferner weist die Wischvorrichtung 10 ein Wischblatt 16 auf, welches eine Windabweisereinheit, zwei Federschienen und eine Wischlippe umfasst. Die Wischlippe ist während des Wischbetriebs dazu vorgesehen an der Fahrzeugscheibe anzuliegen und über diese zu wischen. Die Wischlippe ist über die Federschienen in der Windabweisereinheit gehalten. Die Windabweisereinheit des Wischblatts 16 ist zweiteilig ausgebildet und besteht aus zwei Windabweiserelementen. Grundsätzlich wäre jedoch auch denkbar, dass die Windabweisereinheit einteilig ausgebildet ist und aus einem Windabweiserelement besteht.

Die Wischvorrichtung 10 ist dazu vorgesehen während eines Betriebs, insbesondere entlang eines Kreisbogens in zwei entgegengesetzten Wischrichtungen 20, 20' über die Fahrzeugscheibe zu wischen. Die Wischvorrichtung 10 ist dazu vorgesehen, Wischflüssigkeit 18 gezielt in eine der Wischrichtungen 20, 20' abzugeben. Die Wischrichtungen 20, 20' liegen jeweils in beiden senkrecht zur Haupterstreckungsrichtung des Wischblattes 16 zeigenden Richtungen. Im vorliegenden Fall ist eine erste Wischrichtung 20, bezogen auf eine ebene Standfläche des Fahrzeugs, nach oben gerichtet. Eine zweite Wischrichtung 20' ist, bezogen auf eine ebene Standfläche des Fahrzeugs, nach unten gerichtet. Die Wischvorrichtung 10 weist eine Fluidausgabeeinheit 52 auf. Die Fluidausgabeeinheit 52 ist dazu vorgesehen, Fluid, insbesondere Wischflüssigkeit 18, gezielt in beide Wischrichtungen 20, 20' des Wischblatts 16 abzugeben. Die Fluidausgabeeinheit 52 weist im vorliegenden Fall mehrere Fluidausgabeöffnungen 48, 48', 48", 48‴ zu einer Wischflüssigkeitsabgabe auf.

Zur Wischflüssigkeitsabgabe sind beispielhaft vier Fluidausgabeöffnungen 48, 48', 48", 48‴ der Fluidausgabeeinheit 52 an dem Wischblatt 16 gezeigt. Die Fluidausgabeöffnungen 48, 48' sind dazu vorgesehen, Wischflüssigkeit 18 gezielt in Wischrichtungen 20 des Wischblatts 16 abzugeben. Die Fluidausgabeöffnungen 48", 48‴ sind dazu vorgesehen, Wischflüssigkeit 18 gezielt in Wischrichtungen 20' des Wischblatts 16 abzugeben. Grundsätzlich wäre denkbar, dass die Fluidausgabeöffnungen 48, 48', 48", 48‴ mit Düsen versehen sind, welche zu einer gezielten Abgabe von Fluid vorgesehen sind. Die Fluidausgabe kann dabei in beliebigen Winkeln von 0° bis zu 90° zur jeweiligen Wischrichtung 20, 20' erfolgen. Vorteilhaft wird hinter den Fluidausgabeöffnungen 48, 48', 48", 48‴ eine normalverteilte Wischflüssigkeitsausgabe erreicht. Gestrichelte Linien verdeutlichen schematisch potenzielle Fluidausgaberichtungen der Wischflüssigkeit 18 an den Fluidausgabeöffnungen 48, 48' für die erste Wischrichtung 20. Es sind auch gestrichelte Linien gezeigt, die potenzielle Fluidausgaberichtungen der Wischflüssigkeit 18 an den Fluidausgabeöffnungen 48", 48‴ für die zweite Wischrichtung 20' schematisch verdeutlichen.

Des Weiteren weist die Wischvorrichtung 10 eine Fluidkanaleinheit 14 auf. Die Fluidkanaleinheit 14 ist an dem Wischarm 12 geführt. Die Fluidkanaleinheit 14 erstreckt sich vom nicht gezeigten Fahrzeug kommend über den Wischarm 12 hin zu dem Wischblatt 16. Die Fluidkanaleinheit 14 ist dazu vorgesehen, Wischflüssigkeit 18 aus einem nicht gezeigten Reservoir am Fahrzeug entlang des Wischarms 12 zu der Fluidausgabeeinheit 52 in dem Wischblatt 16 zu führen.

Die Fluidkanaleinheit 14 umfasst einen Fluidkanal 28. Die Fluidkanaleinheit 14 umfasst ferner einen ersten Fluidteilkanal 30. Die Fluidkanaleinheit 14 umfasst zudem einen weiteren Fluidteilkanal 30'. Der erste Fluidteilkanal 30 und der weitere Fluidteilkanal 30' sind strömungstechnisch nach dem Fluidkanal 28 angeordnet. Der erste Fluidteilkanal 30 und der weitere Fluidteilkanal 30' stellen parallele Kanäle zur Fluidleitung dar. Ein in dem Fluidkanal 28 geführtes Fluid kann sowohl in dem ersten Fluidteilkanal 30 als auch in dem weiteren Fluidteilkanal 30' weitergeführt werden. Die Fluidteilkanäle 30, 30' sind nicht weiter sichtbar mit über den Wischblattadapter mit Kanälen der Fluidausgabeeinheit 52 gekoppelt.

Die Wischvorrichtung 10 weist eine weitere Ventileinheit 24 auf. Die weitere Ventileinheit 24 ist zwischen den Fluidteilkanälen 30, 30' und dem Fluidkanal 28 angeordnet. Die weitere Ventileinheit 24 verbindet den Fluidkanal 28 mit den Fluidteilkanälen 30, 30'. Die weitere Ventileinheit 24 ist in einer Umgebung einer Lagerung des Wischarms 12 am Fahrzeug angeordnet. Die weitere Ventileinheit 24 ist in einem der Lagerung naheliegenden Endbereich des Wischarms 12 angeordnet. Der Fluidkanal 28 erstreckt sich von der Lagerung des Wischarms 12 am Fahrzeug bis hin zu der weiteren Ventileinheit 24. Ab der weiteren Ventileinheit 24 führen die zwei Fluidteilkanäle 30, 30' die Wischflüssigkeit 18 vom Fluidkanal 28 kommend zu jeweils einer Seite der Fluidausgabeeinheit 52 in dem Wischblatt 16. Der erste Fluidteilkanal 30 führt Wischflüssigkeit 18 für die erste Wischrichtung 20. Der weitere Fluidteilkanal 30' führt Wischflüssigkeit 18 für die zweite Wischrichtung 20'.

Die weitere Ventileinheit 24 steuert den richtungsabhängigen Fluss von Wischflüssigkeit 18 in die jeweilige Wischrichtung 20, 20'. Die weitere Ventileinheit 24 ist als Drei-Wege-Ventil ausgeprägt. Sie besitzt einen Fluideingang 44 und zwei Fluidausgänge 42, 42'. Der Fluideingang 44 ist mit dem Fluidkanal 28 gekoppelt, welcher Wischflüssigkeit 18 zuführt. Die zwei Fluidausgänge 42, 42' sind mit jeweils einem der Fluidteilkanäle 30, 30' gekoppelt. Der Fluidkanal 28 versorgt die weitere Ventileinheit 24 mit Wischflüssigkeit 18. Die weitere Ventileinheit 24 reguliert die Wischflüssigkeitsweitergabe für jede Wischrichtung 20, 20' oder den Sperrbetrieb. Zwei Fluidteilkanäle 30, 30' führen Wischflüssigkeit 18 je nach Wischrichtung 20, 20' von der weiteren Ventileinheit 24 zum Wischblatt 16. Die weitere Ventileinheit 24 ist einzeln austauschbar ausgebildet. Der erste Fluidteilkanal 30 führt Wischflüssigkeit 18 für die Wischrichtung 20 von der weiteren Ventileinheit 24 zum Wischblatt 16. Der weitere Fluidteilkanal 30' führt Wischflüssigkeit 18 für die Wischrichtung 20' von der weiteren Ventileinheit 24 zum Wischblatt 16.

Die weitere Ventileinheit 24 weist ein zylindrisches Gehäuse 36 auf. Ferner weist die Ventileinheit 24 drei Kopplungsbereiche 46, 46', 46" auf. In einem ersten Kopplungsbereich 46 ist die weitere Ventileinheit 24 mit dem Fluidkanal 28 der Fluidkanaleinheit 14 gekoppelt. In einem zweiten und dritten Kopplungsbereich 46', 46" ist die weitere Ventileinheit 24 mit jeweils einem der Fluidteilkanäle 30, 30' der Fluidkanaleinheit 14 gekoppelt. In dem ersten Kopplungsbereich 46 ist der Fluidkanal 28 an die weitere Ventileinheit 24 zur Führung von Wischflüssigkeit 18 von einem Wischflüssigkeitsreservoir zur weiteren Ventileinheit 24 gekoppelt. In einem zweiten Kopplungsbereich 46' ist der erste Fluidteilkanal 30 an die weitere Ventileinheit 24 zur Führung von Wischflüssigkeit 18 von der weiteren Ventileinheit 24 zu einer Fluidausgabe in Wischrichtung 20 gekoppelt. In einem dritten Kopplungsbereich 46" ist der weitere Fluidteilkanal 30' an die weitere Ventileinheit 24 zur Führung von Wischflüssigkeit 18 von der weiteren Ventileinheit 24 zu einer Fluidausgabe in Wischrichtung 20' gekoppelt. Die weitere Ventileinheit 24 weist in den Kopplungsbereichen 46, 46', 46" jeweils einen Fluidanschluss 38, 38', 38" auf. Die weitere Ventileinheit 24 weist einen ersten Fluidanschluss 38 auf. Und die weitere Ventileinheit 24 weist einen zweiten Fluidanschluss 38' auf. Zudem umfasst die weitere Ventileinheit 24 einen dritten Fluidanschluss 38". Ein erster Fluidanschluss 38 ist zur Kopplung mit dem Fluidkanal 28 zur Einspeisung von Wischflüssigkeit vorgesehen. Ein zweiter Fluidanschluss 38' ist zur Weiterleitung von Wischflüssigkeit bei der ersten Wischrichtung 20 zu einer Kopplung mit dem ersten Fluidteilkanal 30 vorgesehen. Ein dritter Fluidanschluss 38" ist zur Weiterleitung von Wischflüssigkeit bei der zweiten Wischrichtung 20' zu einer Kopplung mit dem weiteren Fluidteilkanal 30' vorgesehen.

Die Fluidanschlüsse 38, 38', 38" sind im vorliegenden Fall von hohlzylindrischen Fortsätzen an dem Gehäuse 36 der weiteren Ventileinheit 24 ausgebildet. Zu einer Fixierung von Schläuchen, welche jeweils den Fluidkanal 28 und die Fluidteilkanäle 30, 30' begrenzen, weisen die Fluidanschlüsse 38, 38', 38" jeweils einen keilförmigen Haltebereich 40, 40', 40" auf. Die Haltebereiche 40, 40', 40" sind im vorliegenden Fall eine mit abnehmendem Abstand entlang der Fluidanschlüsse 38, 38', 38" zur weiteren Ventileinheit 24 stärker ausgeprägte Verbreiterung des Zylinderradius der Fluidanschlüsse 38, 38', 38". Die Verbreiterung des Zylinderradius der Fluidanschlüsse 38, 38', 38" beginnt im vorliegenden Beispiel an dem der weiteren Ventileinheit 24 abgewandten Ende der Fluidanschlüsse 38, 38', 38". Die Verbreiterung des Zylinderradius endet bevor entlang der Haupterstreckungsrichtung der Fluidanschlüsse 38, 38', 38" das Gehäuse 36 der weiteren Ventileinheit 24 erreicht wird und begrenzt damit die Haltebereiche 40, 40', 40". Hinter den Haltebereichen 40, 40', 40" bis zum Gehäuse 36 der weiteren Ventileinheit 24 weisen die Fluidanschlüsse 38, 38', 38" einen gleichbleibenden Radius auf, der wesentlich kleiner ist als die breiteste Stelle der Haltebereiche 40, 40', 40". Wird ein Schlauch auf einen Fluidanschluss gesteckt, so dehnen die Haltebereiche den Schlauch. Wird der Schlauch über den Punkt der maximalen Ausdehnung des Haltebereiches gesteckt, so ist der Schlauch unterschiedlich stark gedehnt. Durch die Dehnung entsteht eine mit zunehmender Dehnung steigende, der Dehnung entgegengesetzte Kraft. Durch die unterschiedliche Dehnung in Teilbereichen des Schlauches entstehen so unterschiedlich starke Kräfte in Teilbereichen des Schlauches. Durch die unterschiedlichen Kräfte in Teilbereichen des Schlauches wird der Schlauch an den Fluidanschlüssen durch die Haltebereiche fixiert. Der vorliegende Fall zeigt drei baugleiche Fluidanschlüsse 38, 38', 38". Denkbar ist auch eine ähnliche Ausgestaltung mit beliebiger Größenvariation. Auch sind alternative und oder zusätzliche Möglichkeiten zur sicheren Befestigung der Fluidteilkanäle 30, 30' und/oder des Fluidkanals 28 an der weiteren Ventileinheit 24 in Form von Widerhaken, Haftmitteln oder mechanischen Schließringen an den Fluidanschlüssen 38, 38', 38" denkbar.

Ferner bildet das Gehäuse 36 der weiteren Ventileinheit 24 im Inneren einen Hohlraum 32 aus. Im Inneren des Gehäuses 36 der weiteren Ventileinheit 24 ist ein Hohlraum 32 ausgebildet, der zur Aufnahme der Wischflüssigkeit 18 vorgesehen ist. Durch den Hohlraum 32 kann in verschiedenen Ventilstellungen Wischflüssigkeit 18 vom Fluidkanal 28 in einen der Fluidteilkanäle 30 fließen. Die weitere Ventileinheit 24 weist einen in dem Hohlraum 32 drehbar geführten Ventilkörper 54 auf. Eine Drehbewegung 50 des Ventilkörpers 54 der weiteren Ventileinheit 24 realisiert verschiedene Ventilstellungen. Die weitere Ventileinheit 24 ist als 3/3 Wegeventil ausgebildet. Gezeigt ist im vorliegenden Fall bespielhaft eine Fluidflussstellung vom Fluidkanal 28 in einen ersten Fluidteilkanal 30.

Ein Fluidfluss wird durch eine Drehbewegung 50 des Ventilkörpers 54 in eine Stellung zur zeitgleichen Öffnung der Fluidanschlüsse 38, 38', 38" für den Fluidkanal 28 und für zumindest einen Fluidteilkanal 30, 30' ermöglicht. Möglich sind die Öffnung des Fluidanschlusses 38 für den Fluidkanal 28 und die zeitgleiche Öffnung des Fluidanschlusses 38' für den ersten Fluidteilkanal 30. In dieser Ventilstellung ist ein Fluidfluss vom Fluidkanal 28 nur in den ersten Fluidteilkanal 30 ermöglicht. Außerdem ist die zeitgleiche Öffnung des Fluidanschlusses 38 für den Fluidkanal 28 und die Öffnung des Fluidanschlusses 38" für den weiteren Fluidteilkanal 30' möglich. In dieser Ventilstellung ist ein Fluidfluss vom Fluidkanal 28 nur in den weiteren Fluidteilkanal 30' ermöglicht.

Die Sperrstellung wird von der weiteren Ventileinheit 24 realisiert, indem der Ventilkörper 54 so gedreht wird, dass er zumindest Fluidanschluss 38 blockiert. Alternativ kann der Ventilkörper 54 so gedreht werden, dass er die Fluidanschlüsse 38', 38" blockiert, um die Sperrstellung zu realisieren.

Grundsätzlich ist auch denkbar, dass die weitere Ventileinheit 24 als 3/2 Wegeventil ausgebildet ist. In diesem Fall wird keine Sperrstellung durch Verdrehen des Ventilkörpers 54 von der weiteren Ventileinheit 24 realisiert.

Die weitere Ventileinheit 24 ist als elektrische Ventileinheit ausgebildet. Die weitere Ventileinheit 24 umfasst zwei elektrische Anschlüsse 26, 26'. Die weitere Ventileinheit 24 umfasst einen ersten elektrischen Anschluss 26. Die Steuerung der weiteren Ventileinheit 24 erfolgt über den ersten elektrischen Anschluss 26'. Über den ersten elektrischen Anschluss 26 ist die eine weitere Ventileinheit 24 über eine Steuer- und/oder Regeleinheit ansteuerbar, die von der Bordsteuereinheit getrennt bereitgestellt ist. Die weitere Ventileinheit 24 umfasst einen nicht weiter sichtbaren Aktuator, welcher mittels des ersten elektrischen Anschlusses 26 angesteuert wird. Der Aktuator ist zu einer Verdrehung des Ventilkörpers 54 vorgesehen. Der Ventilkörper 54 wird mittels des Aktuators in die verschiedenen Schaltstellungen verdreht.

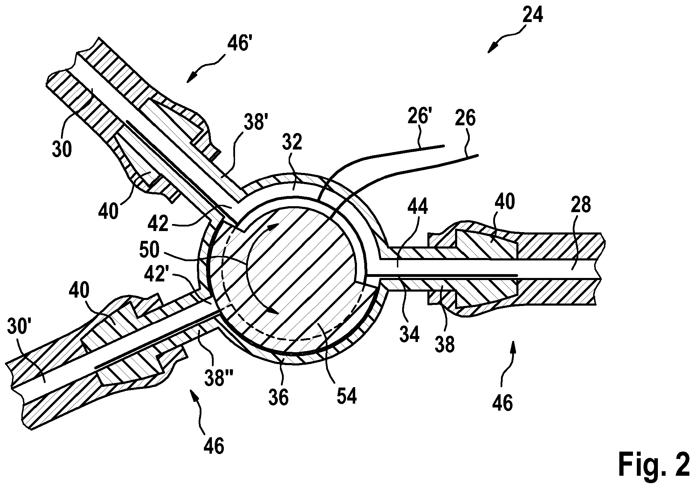

Die weitere Ventileinheit 24 umfasst einen zweiten elektrischen Anschluss 26'. Über den zweiten elektrischen Anschluss 26' (Fig. 2) ist die weitere Ventileinheit 24 von innen beheizbar ausgebildet. Die weitere Ventileinheit 24 umfasst zudem ein Heizelement 34. Die weitere Ventileinheit 24 kann durch ein in die weitere Ventileinheit 24 integriertes Heizelement 34 beheizt werden. In Figur 2 ist beispielhaft eine Anordnung des integrierten Heizelements 34 als Heizdraht innerhalb der weiteren Ventileinheit 24 gezeigt. Weitere Ausprägungen wie beispielsweise ein Verlauf des Heizelements 34 teilweise außerhalb der weiteren Ventileinheit 24 sind denkbar. Zum Beheizen der weiteren Ventileinheit 24 wird die Energie über den zweiten der beiden elektrischen Anschlüsse 26 an die weitere Ventileinheit 24 geliefert. Im vorliegenden Fall sind die elektrischen Anschlüsse 26, 26' in Form von Kabeln und/oder Drähten dargestellt. Dem Fachmann könnten weitere Ausgestaltungen zur elektrischen Energieversorgung der weiteren Ventileinheit 24 wie beispielsweise eine integrierte Batterie oder eine energieerzeugende Vorrichtung (Solarzelle, Dynamo) naheliegen.

Die weitere Ventileinheit 24 ist in den Wischarm 12 integriert. Grundsätzlich wäre auch eine andere einem Fachmann als sinnvoll erscheinende Ausbildung der weiteren Ventileinheit 24 denkbar. Beispielsweise könnte die weitere Ventileinheit 24 teilintegriert in den Wischarm 12 angeordnet sein oder aber extern am Wischarm 12 angebracht werden.

Außerdem weist die Wischvorrichtung 10 zwei mechanische Ventileinheiten 22, 22' auf. Die mechanischen Ventileinheiten 22, 22' sind jeweils in der Umgebung der Verbindung zwischen Wischarm 12 und Wischblatt 16 im jeweiligen Fluidteilkanal 30, 30' angeordnet. Die mechanischen Ventileinheiten 22, 22' liegen in dem der Lagerung abgewandten ersten Endbereich des Wischarms 12 jeweils in einem der Fluidteilkanäle 30, 30' für jede der beiden Wischrichtungen 20, 20'. Die mechanischen Ventileinheiten 22, 22' sind jeweils in einen der Fluidteilkanäle 30, 30' zwischengeschaltet. Die Fluidteilkanäle 30, 30' sind jeweils durch eine der mechanischen Ventileinheiten 22, 22' unterbrochen. Die weitere Ventileinheit 24, die wesentlich von den mechanischen Ventileinheiten 22, 22' beabstandet ist, ist strömungstechnisch vor den zwei mechanischen Ventileinheiten 22, 22' angeordnet. Die zwei mechanischen Ventileinheiten 22, 22' sind in den Wischarm 12 integriert. Grundsätzlich wäre auch eine andere einem Fachmann als sinnvoll erscheinende Anordnung der mechanischen Ventileinheiten 22, 22' denkbar. Beispielsweise könnten die mechanischen Ventileinheiten 22, 22' teilintegriert in den Wischarm 12 oder getrennt vom Wischarm 12 ausgeprägt angeordnet sein. Diese mechanischen Ventileinheiten 22, 22' regulieren den Rückfluss von Wischflüssigkeit 18 in jedem Fluidteilkanal 30 für jede Wischrichtung 20, 20'. Durch die mechanischen Ventileinheiten 22, 22' wird der Rückfluss von Wischflüssigkeit 18 in den Fluidteilkanälen 30, 30' unterbunden. Die mechanischen Ventileinheiten 22, 22' sind jeweils von Rückschlagventilen gebildet. Beide mechanischen Ventileinheiten 22, 22' sind einzeln austauschbar ausgebildet.

## Patentansprüche

1. Wischvorrichtung (10) mit einem Wischarm (12), der zumindest eine Fluidkanaleinheit (14) führt, und einem Wischblatt (16), welche dazu vorgesehen ist Wischflüssigkeit (18) gezielt in Wischrichtung (20, 20') des Wischblattes (16) abzugeben, und mit zumindest einer mechanischen Ventileinheit (22), die in der Umgebung der Verbindung zwischen Wischarm (12) und Wischblatt (16) angeordnet ist, **gekennzeichnet durch** zumindest eine weitere Ventileinheit (24), die wesentlich von der zumindest einen mechanischen Ventileinheit (22) beabstandet ist und strömungstechnisch vor der zumindest einen mechanischen Ventileinheit (22) angeordnet ist.

2. Wischvorrichtung (10) nach Anspruch 1, **dadurch gekennzeichnet, dass** die zumindest eine weitere Ventileinheit (24) zumindest teilweise in einer Umgebung einer Lagerung des Wischarms (12) am Fahrzeug angeordnet ist.

3. Wischvorrichtung (10) nach Anspruch 1 oder 2, **dadurch gekennzeichnet, dass** die zumindest eine mechanische Ventileinheit (22) zumindest teilweise in den Wischarm (12) integriert ist.

4. Wischvorrichtung (10) nach einem der vorhergehenden Ansprüche, **dadurch gekennzeichnet, dass** die zumindest eine weitere Ventileinheit (24) zumindest teilweise in den Wischarm (12) integriert ist.

5. Wischvorrichtung (10) nach einem der vorhergehenden Ansprüche, **dadurch gekennzeichnet, dass** die weitere Ventileinheit (24) über eine Steuer- und/oder Regeleinheit ansteuerbar ist, die von der Bordsteuereinheit getrennt ausgebildet ist.

6. Wischvorrichtung (10) nach einem der vorhergehenden Ansprüche, **dadurch gekennzeichnet, dass** zumindest eine der Ventileinheiten (22), (24) beheizbar ausgebildet ist.

7. Wischvorrichtung (10) nach einem der vorhergehenden Ansprüche, **dadurch gekennzeichnet, dass** die zumindest eine mechanische Ventileinheit (22) einzeln austauschbar ausgebildet ist.

8. Wischvorrichtung (10) nach einem der vorhergehenden Ansprüche, **dadurch gekennzeichnet, dass** die zumindest eine weitere Ventileinheit (24) einzeln austauschbar ausgebildet ist.

9. Wischvorrichtung (10) nach einem der vorhergehenden Ansprüche, **dadurch gekennzeichnet, dass** die zumindest eine weitere Ventileinheit (24) zwei elektrische Anschlüsse (26, 26') besitzt.

## Claims

1. Wiper device (10) with a wiper arm (12), which guides at least one fluid channel unit (14), and with a wiper blade (16) which is provided for dispensing wiper fluid (18) in a targeted manner in the wiping direction (20, 20') of the wiper blade (16), and with at least one mechanical valve unit (22) which is arranged in the vicinity of the connection between wiper arm (12) and wiper blade (16), **characterized by** at least one further valve unit (24) which is substantially spaced apart from the at least one mechanical valve unit (22) and is arranged in terms of flow upstream of the at least one mechanical valve unit (22).

2. Wiper device (10) according to Claim 1, **characterized in that** the at least one further valve unit (24) is at least partially arranged in a vicinity of a mounting of the wiper arm (12) on the vehicle.

3. Wiper device (10) according to Claim 1 or 2, **characterized in that** the at least one mechanical valve unit (22) is at least partially integrated in the wiper arm (12).

4. Wiper device (10) according to one of the preceding claims, **characterized in that** the at least one further valve unit (24) is at least partially integrated in the wiper arm (12).

5. Wiper device (10) according to one of the preceding claims, **characterized in that** the further valve unit (24) is activatable via a control and/or regulating unit which is formed separately from the onboard control unit.

6. Wiper device (10) according to one of the preceding claims, **characterized in that** at least one of the valve units (22), (24) is designed to be heatable.

7. Wiper device (10) according to one of the preceding claims, **characterized in that** the at least one mechanical valve unit (22) is designed to be individually exchangeable.

8. Wiper device (10) according to one of the preceding claims, **characterized in that** the at least one further valve unit (24) is designed to be individually exchangeable.

9. Wiper device (10) according to one of the preceding claims, **characterized in that** the at least one further valve unit (24) has two electrical connections (26, 26').

## Revendications

1. Dispositif d'essuyage (10) comprenant un bras d'essuyage (12), qui guide au moins une unité de canal de fluide (14), et un balai d'essuyage (16) qui est prévu pour délivrer un fluide d'essuyage (18) de manière ciblée dans une direction d'essuyage (20, 20') du balai d'essuyage (16), et comprenant au moins une unité de soupape mécanique (22), qui est agencée dans l'environnement de la liaison entre le bras d'essuyage (12) et le balai d'essuyage (16), **caractérisé par** au moins une unité de soupape supplémentaire (24), qui est essentiellement espacée de l'au moins une unité de soupape mécanique (22) et qui est agencée en amont de l'au moins une unité de soupape mécanique (22) du point de vue de l'écoulement.

2. Dispositif d'essuyage (10) selon la revendication 1, **caractérisé en ce que** l'au moins une unité de soupape supplémentaire (24) est agencée au moins partiellement dans un environnement d'un support du bras d'essuyage (12) sur le véhicule.

3. Dispositif d'essuyage (10) selon la revendication 1 ou 2, **caractérisé en ce que** l'au moins une unité de soupape mécanique (22) est au moins partiellement intégrée dans le bras d'essuyage (12).

4. Dispositif d'essuyage (10) selon l'une quelconque des revendications précédentes, **caractérisé en ce que** l'au moins une unité de soupape supplémentaire (24) est au moins partiellement intégrée dans le bras d'essuyage (12) .

5. Dispositif d'essuyage (10) selon l'une quelconque des revendications précédentes, **caractérisé en ce que** l'unité de soupape supplémentaire (24) peut être commandée par l'intermédiaire d'une unité de commande et/ou de régulation, qui est configurée séparément de l'unité de commande de bord.

6. Dispositif d'essuyage (10) selon l'une quelconque des revendications précédentes, **caractérisé en ce qu'**au moins l'une des unités de soupape (22), (24) est configurée sous forme chauffable.

7. Dispositif d'essuyage (10) selon l'une quelconque des revendications précédentes, **caractérisé en ce que** l'au moins une unité de soupape mécanique (22) est configurée sous forme individuellement remplaçable.

8. Dispositif d'essuyage (10) selon l'une quelconque des revendications précédentes, **caractérisé en ce que** l'au moins une unité de soupape supplémentaire (24) est configurée sous forme individuellement remplaçable.

9. Dispositif d'essuyage (10) selon l'une quelconque des revendications précédentes, **caractérisé en ce que** l'au moins une unité de soupape supplémentaire (24) possède deux raccords électriques (26, 26').
